# EUROPÄISCHE PATENTSCHRIFT

(11) **EP 2 079 945 B1**
(45) Veröffentlichungstag und Bekanntmachung des Hinweises auf die Patenterteilung: **17.08.2016**
(21) Anmeldenummer: 07820838.6
(22) Anmeldetag: 02.10.2007
(51) Int. Cl.: F16H 61/32, F16H 63/30

(54) **VORRICHTUNG ZUM BETÄTIGEN EINES ALS LOSRAD AUSGEFÜHRTEN ZAHNRADES EINER GETRIEBEEINRICHTUNG**
DEVICE FOR ACTUATING A GEARWHEEL, WHICH IS DESIGNED AS A LOOSE WHEEL, OF A TRANSMISSION DEVICE
DISPOSITIF D'ACTIONNEMENT D'UNE ROUE DENTÉE RÉALISÉE COMME UNE ROUE LIBRE D'UN DISPOSITIF DE TRANSMISSION

(30) Priorität: 19.10.2006 DE 102006049274
(43) Veröffentlichungstag der Anmeldung: 22.07.2009
(73) Patentinhaber: ZF Friedrichshafen AG, 88046 Friedrichshafen (DE)
(72) Erfinder: REISCH, Matthias, 88214 Ravensburg (DE); MOHR, Mark, 88069 Tettnang (DE); DREIBHOLZ, Ralf, 88074 Meckenbeuren (DE)
(86) Internationale Anmeldenummer: PCT/EP2007/060456
(87) Internationale Veröffentlichungsnummer: WO 2008/046736

(56) Entgegenhaltungen:
- EP-A- 0 391 604
- EP-A- 1 357 317

## Beschreibung

Die Erfindung betrifft eine Vorrichtung zum Betätigen eines als Losrad ausgeführten Zahnrades einer Getriebeeinrichtung gemäß der im Oberbegriff des Patentanspruches 1 näher definierten Art.

Bei aus der Praxis bekannten Vorgelegegetrieben werden zum Zu- oder Abschalten von als Losräder ausgeführten Zahnrädern Schaltelemente, wie Synchronisierungen, Klauen oder Reibelemente in der Regel mittels Schaltgabeln oder Schaltschwingen betätigt, welche in Bezug auf die das Losrad bzw. mehrere Losräder tragende Welle von außen auf die Schaltelemente zugreifen. Dabei wird ein Mindestabstand zwischen zwei benachbart zueinander angeordneten Losrädern, die durch ein gemeinsames Schaltelement betätigbar sind, unter anderem durch die Breite einer Schiebemuffe und zusätzlich die Schaltwege, welche die Schiebemuffe zum Zuschalten des einen und des anderen Losrades zurücklegen muss, bestimmt.

Nachteilhafterweise weisen Vorgelegegetriebe, bei welchen Schaltelemente von außen betätigt werden, in radialer Richtung einen hohen Bauraumbedarf auf, der insbesondere in Automobilen nur begrenzt zur Verfügung steht.

Um einen radialen Bauraumbedarf eines Getriebes zu reduzieren ist dazu übergegangen worden, Schaltelemente von Getriebeeinrichtungen, wie Doppelkupplungsgetriebe, automatisierte Schaltgetriebe oder Planetengetriebe, aus dem Inneren einer Losräder tragenden Welle heraus zu betätigen, wobei aus der DE 102 06 84 A1, der DE 43 25 964 A1 sowie der DE 103 02 502 A1 verschiedene Lösungen zum Betätigen von Schaltelementen aus einer Welle heraus mittels einer hydraulischen, pneumatischen, mechanischen und/oder elektromechanischen Ansteuerung bekannt sind.

Bei aus dem Stand der Technik bekannten mechanischen oder elektromechanischen Betätigungen eines zum Zu- oder Abschalten eines als Losrad ausgeführten Zahnrades vorgesehenen Schaltelementes ist es beispielsweise vorgesehen, das Schaltelement über ein durch die Welle geführtes Gestänge zu betätigen. Umfangsseitig der Welle bzw. des das Losrad aufweisenden Radsatzes ist ein geeignetes Schaltsystem zur Erzeugung eines H-Schaltbildes bzw. zur elektrischen Betätigung erforderlich, welche die Herstellkosten sowie ein Gewicht einer Getriebeeinrichtung in unerwünschtem Umfang erhöht. Zusätzlich erfordert das im Umfangsbereich einer Welle angeordnete Schaltsystem in radialer Richtung viel Bauraum und verursacht Reibungsverluste.

Die Gattungsgemäße EP-A-0 391 604 zeigt eine Vorrichtung zum Betätigen eines drehbar auf einer Welle gelagerten Bauteiles, vorzugsweise eines als Losrad ausgeführten Zahnrades einer Getriebeeinrichtung, welches Bauteil über wenigstens eine einen elektrischen Aktor aufweisende Zuschalteinrichtung in einen zugeschalteten Zustand überführbar ist, zu dem das Bauteil mit der Welle drehfest verbunden ist, wobei das Bauteil aus dem Inneren der Welle heraus mit der zum Zu- oder Abschalten erforderlichen Betätigungskraft beaufschlagbar ist und der Aktor zumindest teilweise im Inneren der Welle angeordnet ist. Der elektrische Aktor ist als Elektromagnet ausgebildet.

Der vorliegenden Erfindung liegt die Aufgabe zugrunde, eine Vorrichtung zum Betätigen eines drehbar auf einer Welle gelagerten Bauteiles, vorzugsweise eines als Losrad ausgeführten Zahnrades einer Getriebeeinrichtung, zur Verfügung zu stellen, die einfach und kostengünstig herstellbar ist, einen geringen Bauraumbedarf sowie ein niedriges Bauteilgewicht aufweist und durch deren Einsatz ein Getriebe mit einem guten Wirkungsgrad betreibbar ist.

Erfindungsgemäß wird diese Aufgabe mit einer Vorrichtung gemäß den Merkmalen des Patentanspruches 1 gelöst.

Bei der erfindungsgemäßen Vorrichtung zum Betätigen eines drehbar auf einer Welle gelagerten Bauteiles vorzugsweise eines als Losrad ausgeführten Zahnrades einer Getriebeeinrichtung, welches Bauteil über wenigstens eine einen elektrischen Aktor aufweisende Zuschalteinrichtung in einen zugeschalteten Zustand überführbar ist, zu dem das erste Zahnrad mit der Welle drehfest verbunden ist, wobei der wenigstens eine elektrische Aktor wenigstens teilweise im Inneren der ersten Welle angeordnet ist und das erste Zahnrad aus dem Inneren der Welle heraus mit der zum Zu- oder Abschalten erforderlichen Betätigungskraft beaufschlagbar ist.

Erfindungsgemäß weist die Zuschalteinrichtung zwischen dem Aktor und dem Bauteil eine Antriebswandlereinrichtung auf, mittels welcher ein rotatorischer Antrieb des Aktors bauraumgünstig innerhalb der Welle in eine translatorische Antriebsbewegung umwandelbar ist, und der elektrische Aktor ist als Elektromotor ausgebildet.

Damit wird ein bei herkömmlichen Getriebeeinrichtungen zur Verfügung stehender Bauraum innerhalb von Losräder tragenden Wellen, welche zur Gewichtsersparnis häufig im Zentrum hohl ausgeführt werden, auf einfache Art und Weise durch die Anordnung wenigstens eines Elektromotors in diesem Bereich, der zur Betätigung eines als Losrad ausgeführten Zahnrades vorgesehen ist, genutzt und ein Bauraumbedarf einer Getriebeeinrichtung in radialer und/oder in axialer Richtung auf einfache Art und Weise verringert.

Die Verwendung des Elektromotors und die Anordnung des Elektromotors im Inneren der das zu betätigende Losrad tragenden Welle ermöglicht auf einfache Art und Weise auf eine aus dem Stand der Technik bekannte externe Schaltmimik zu verzichten und somit im Umfangsbereich der Welle Bauraum einzusparen. Darüber hinaus wird durch die im Vergleich zu herkömmlichen Getriebeeinrichtungen konstruktiv einfachere Ausführung der Zuschalteinrichtung auch ein Gesamtgewicht einer Getriebeeinrichtung reduziert. Zudem sind Reibungsverluste während der Betätigung eines Losrades aufgrund der reduzierten Durchmesserbereiche, innerhalb der eine Betätigung bzw. eine Übertragung der zum Zu- oder Abschalten erforderlichen Betätigungskraft des Losrades erfolgt, im Vergleich zu aus dem Stand der Technik bekannten Schaltsystemen verringert.

Bei einer vorteilhaften Weiterbildung der erfindungsgemäßen Vorrichtung ist der Elektromotor drehfest mit einem Gehäuse der Getriebeeinrichtung verbunden, womit ein Energieaustausch sowie eine Datenübertragung zwischen dem Elektromotor und mit dem Elektromotor zusammenwirkenden und gehäusefest ausgeführten Bauteilen einer Getriebeeinrichtung oder eines anderen die erfindungsgemäße Vorrichtung aufweisenden Systems, wie eines Keilbremsensystems, auf einfache Art und Weise realisierbar ist.

Alternativ hierzu ist bei einer weiteren vorteilhaften Ausführungsform der erfindungsgemäßen Vorrichtung vorgesehen, dass der Elektromotor drehfest mit der das drehbare Bauteil tragenden Welle verbunden ist und somit im Betrieb mit der Drehzahl der Welle umläuft. Die bietet den Vorteil, dass der Elektromotor vor dem Einbau der Welle in ein Gehäuse in die Welle einsteckbar ist und mit der Welle ein vorkonfektioniertes Modul ausbildet, welches bei einer Endmontage einer Getriebeeinrichtung oder eines anderen Systems während eines einzigen Montageschrittes in ein Gehäuse einsetzbar ist. Zusätzlich ist die Funktionsweise der Vorrichtung bei dieser Ausführung auf einfache Art und Weise extern des Gehäuses der Getriebeeinrichtung oder eines anderen Systems mit einer entsprechenden Prüfeinrichtung überprüfbar.

Bei einer Weiterbildung der letztgenannten Ausführungsform der erfindungsgemäßen Vorrichtung ist die Antriebswandlereinrichtung als eine Spindel-Mutter-Anordnung mit oder ohne Selbsthemmung ausgeführt, womit der rotatorische Antrieb des Elektromotors auf konstruktiv einfache und kostengünstige Art und Weise in eine translatorische Antriebsbewegung zum Erzeugen der zum Zu- oder Abschalten erforderlichen Betätigungskraft des Bauteiles umwandelbar ist.

Um eine Antriebsleistung des Elektromotors und somit einen Bauraumbedarf des Elektromotors möglichst gering zu halten, ist eine vorteilhafte Ausführungsform der erfindungsgemäßen Vorrichtung zwischen dem Elektromotor und der Antriebswandlereinrichtung mit einem Getriebe, vorzugsweise mit einem Planetengetriebe, ausgeführt, mittels welchem die Antriebsleistung des Elektromotors in einem für die Betätigung des Bauteiles erforderlichen Umfang transformierbar ist.

Bei einer weiteren vorteilhaften Ausführungsform der erfindungsgemäßen Vorrichtung ist ein aktueller Schaltzustand des Bauteiles mittels des Elektromotors haltbar, wodurch auf zusätzliche Bauelemente zum Halten des Schaltzustandes des Bauteiles verzichtet werden kann.

Alternativ hierzu ist es bei einer weiteren vorteilhaften Ausgestaltung der erfindungsgemäßen Vorrichtung vorgesehen, dass dem Elektromotor zum Halten des Schaltzustandes des Bauteiles eine elektrisch ansteuerbare Bremse zugeordnet ist, welche im stromlosen Zustand eine Veränderung des Schaltzustandes des Bauteiles sperrt.

In Abhängigkeit der Ausführung des von dem Elektromotor zu betätigenden Bauteiles ist der Elektromotor in Abhängigkeit eines aktuellen Schaltzustandes des Bauteiles und/oder einer aktuell erforderlichen Antriebsleistung ansteuerbar und/oder regelbar. Wird durch den Antrieb des Elektromotors beispielsweise eine ein Losrad einer Getriebeeinrichtung zuschaltende Schaltklaue betätigt, wird der Elektromotor in Abhängigkeit der aktuellen Position der Schaltklaue gesteuert und/oder geregelt betrieben. Wird über den Elektromotor ein reibschlüssiges Lamellenschaltelement eines Getriebes angesteuert, wird die Antriebsleistung des Elektromotors gesteuert und/oder geregelt eingestellt, da das über ein Lamellenschaltelement führbare Drehmoment in Abhängigkeit der auf die Reibelemente aufgebrachten Betätigungskraft steht.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden. Es zeigt:
- Fig. 1: eine stark schematisierte Teillängsschnittansicht eines ersten Ausführungsbeispieles einer Vorrichtung nach der Erfindung, welche in einem Vorgelegegetriebe angeordnet ist; und
- Fig. 2: eine Fig. 1 entsprechende Darstellung eines zweiten Ausführungsbeispieles der erfindungsgemäßen Vorrichtung, die zum Zu- und Abschalten von Losrädern eines Vorgelegegetriebes verwendet wird.

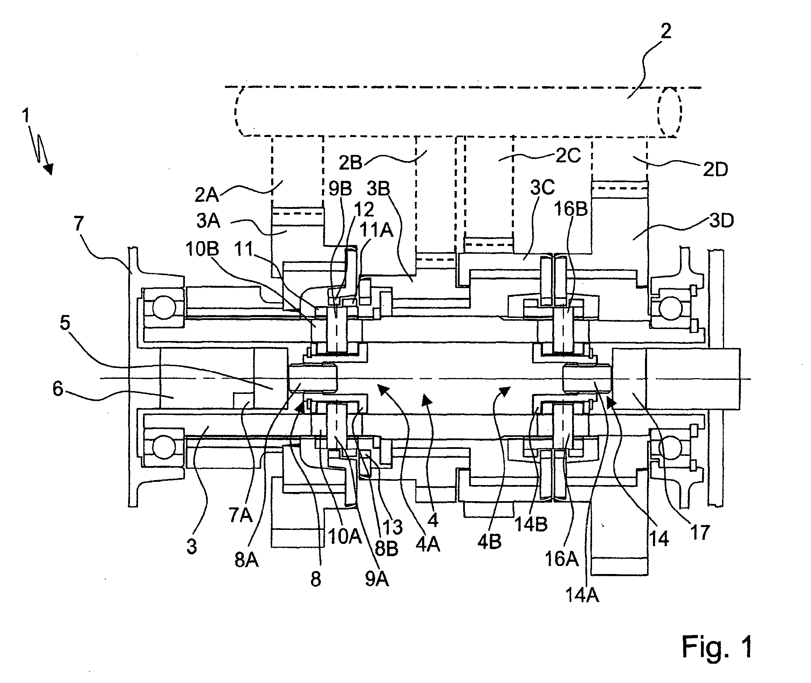

In Fig. 1 ist ein Teil einer als Vorgelegegetriebe ausgeführten Getriebeeinrichtung 1 in einer Längsschnittansicht gezeigt, welches eine Getriebehauptwelle 2 und eine parallel dazu angeordnete Vorgelegewelle 3 aufweist. Auf der Getriebehauptwelle 2 sind mehrere als Festräder ausgeführte Zahnräder 2A bis 2D angeordnet, welche mit mehreren drehbar auf der Vorgelegewelle gelagerten und als Losräder ausgeführten Zahnrädern 3A bis 3D kämmen. Die Losräder 3A und 3B sind über eine erste Zuschalteinrichtung 4A einer Vorrichtung 4 zum Betätigen der Zahnräder 3A bis 3D zuschaltbar, während die Losräder 3C und 3D über eine zweite Zuschalteinrichtung 4B der Vorrichtung 4 zuschaltbar und damit drehfest mit der Vorgelegewelle 3 verbindbar sind.

Die Zuschalteinrichtungen 4A und 4B der Vorrichtung 4 weisen grundsätzlich den gleichen konstruktiven Aufbau auf, weshalb in der nachfolgenden Beschreibung zu Fig. 1 im Wesentlichen auf die Zuschalteinrichtung 4A eingegangen wird.

Die Zuschalteinrichtung 4A ist mit einem vorliegend als Elektromotor ausgeführten elektrischen Aktor 5 und eine dem elektrischen Aktor 5 zugeordnete Steuer- und Leistungselektronik 6 ausgebildet, welche beide drehfest mit einem Gehäusebauteil 7 des Gehäuses der Getriebeeinrichtung 1 verbunden sind. Eine nicht näher dargestellte Motorausgangswelle des elektrischen Aktors 5 ist mit einer Spindel 8A einer Spindel-Mutter-Anordnung 8 drehfest verbunden, so dass bei einem aktorseitigen Antrieb der Spindel 8A diese in Rotation versetzt wird und eine in Eingriff mit der Spindel 8A stehende Mutter 8B, welche über eine ebenfalls nicht näher dargestellte Verdrehsicherung drehfest ausgeführt ist, in axialer Richtung der Vorgelegewelle 3 von dem elektrischen Aktor 5 weg oder auf diesen zu bewegt wird.

Die Mutter 8B ist vorliegend mit zwei die Vorgelegewelle 3 durchgreifenden Bolzen 9A und 9B derart wirkverbunden, dass die Bolzen 9A und 9B von der Mutter 8B in Langlöchern 10A, 10B der Vorgelegewelle 3 in axialer Richtung der Vorgelegewelle 3 verschoben werden. Die Bolzen 9A und 9B rotieren im Betrieb des Vorgelegegetriebes 1 mit der Drehzahl der Vorgelegewelle 3 um die Rotationsachse der Vorgelegewelle 3, während die Mutter 8B drehfest ausgeführt ist. Das bedeutet, dass im Bereich zwischen den Bolzen 9A und 9B und der Mutter 8B zur Betätigung der Losräder 3A und 3B eine Drehzahlauskopplung vorgesehen ist.

Um das Losrad 3A oder das Losrad 3B mit der Vorgelegewelle 3 drehfest verbinden zu können und somit aus einem abgeschalteten in einen zugeschalteten Zustand zu überführen, sind die Bolzen 9A und 9B an ihrem der Mutter 8B abgewandten Ende mit einem die Vorgelegewelle 3 umgebenden Hülsenelement 11 verbunden, das über eine formschlüssige Verbindung mit der Vorgelegewelle 3 drehfest verbunden ist und in axialer Richtung der Vorgelegewelle 3 auf dieser verschiebbar angeordnet ist. Zudem ist das Hülsenelement 11 im Bereich seiner der Vorgelegewelle 3 abgewandten Umfangsfläche mit einem Zahnprofil 11 A ausgebildet, welches in Abhängigkeit einer axialen Position mit einem mit dem Losrad 3A fest verbundenen Zahnprofil 12, einem mit dem Losrad 3B fest verbunden Zahnprofil 13 oder in einer neutralen Zwischenstellung zwischen diesen beiden Zahnprofilen 12 und 13 mit keinem der Zahnprofile 12 und 13 in Eingriff steht und weder das Losrad 3A noch das Losrad 3B drehfest mit der Vorgelegewelle 3 verbunden ist. Die Spindel-Mutter-Anordnung 8 und die Spindel-Mutter-Anordnung 14 stellen jeweils eine Antriebswandlereinrichtung dar, mittels welcher ein rotatorischer Antrieb eines elektrischen Aktors in eine translatorische Antriebsbewegung zum Zu- oder Abschalten der Losräder 3A bis 3D umwandelbar ist.

Um ein selbsttätiges Zu- oder Abschalten eines der Losräder 3A bis 3D zu vermeiden, sind die Spindel-Mutter-Anordnungen 8 und 14 vorliegend selbsthemmend ausgeführt, so dass die Mutter 8B der Spindel-Mutter-Anordnung 8 bzw. die Mutter 14B der Spindel-Mutter-Anordnung 14 ohne aktorseitigen Antrieb ihre Position halten.

Alternativ hierzu ist es bei weiteren in der Zeichnung nicht näher dargestellten Ausführungsformen der Vorrichtung zum Betätigen eines drehbar auf einer Welle gelagerten Bauteiles bzw. eines als Losrad ausgeführten Zahnrades einer Getriebeeinrichtung vorgesehen, dass ein Schaltzustand des Bauteiles durch eine entsprechende Ansteuerung des elektrischen Aktors der Zuschalteinrichtung mittels eines aktorseitig erzeugten Rastmomentes haltbar ist.

Zusätzlich oder alternativ hierzu kann es auch vorgesehen sein, dass dem Aktor zum Halten des Schaltzustandes des Bauteiles, beispielsweise eines Losrades, eine elektrisch ansteuerbare Bremse zugeordnet ist, welche im stromlosen Zustand eine Veränderung des Schaltzustandes des Bauteiles bzw. des Zahnrades sperrt. Dabei ist die Bremse bei der Ausführung des elektrischen Aktors als Elektromotor mit der Motorausgangswelle verbunden, so dass eine Drehbewegung einer Spindel einer Spindel-Mutter-Anordnung in unbestromtem Zustand des Elektromotors vermieden wird.

Im Inneren der Vorgelegewelle 3 ist neben dem elektrischen Aktor 5 und der zugeordneten Steuer- und Leistungselektronik 6 zudem auch ein Energiespeicher 7 zum Speichern von elektrischer Energie vorgesehen, der vorliegend als Kondensator ausgeführt ist, mittels welchem eine dem elektrischen Aktor 5 zugeführte Spannung geglättet wird. Zusätzlich oder alternativ hierzu ist der vorzugsweise als Kondensator ausgeführte Energiespeicher 7 auch zum Zwischenspeichern von für den Betrieb des elektrischen Aktors 5 erforderlicher elektrischer Energie verwendbar.

Darüber hinaus ist die ein Modul darstellende und den Energiespeicher 7, die Steuer- und Leistungselektronik 6 sowie den elektrischen Aktor 5 umfassende Baueinheit mit Ölkanälen ausgeführt, durch welche im Inneren der Vorgelegewelle 3 Hydraulikfluid zum Schmieren, Kühlen oder Betätigen verschiedener Bauteile der Getriebeeinrichtung 1 zu den betreffenden Bauteilen geführt wird.

Bei einer Weiterbildung des in Fig. 1 dargestellten Vorgelegegetriebes 1 ist die Vorrichtung 4 zum Betätigen der Losräder 3A bis 3D, welche die Zuschalteinrichtungen 4A und 4B umfasst, im Bereich zwischen dem elektrischen Aktor 5 und der Spindel-Mutter-Anordnung 8 sowie einem elektrischen Aktor 17 und der Spindel-Mutter-Anordnung 14 in nicht näher dargestellter Art und Weise jeweils mit einer Getriebeeinrichtung ausgebildet, um eine Antriebsleistung des elektrischen Aktors 5 in erforderlichem Umfang transformieren zu können und die Spindel 8A bzw. eine Spindel 14A mit der zum axialen Verschieben der Spindelmutter 8B bzw. 14B erforderlichen Drehmoment antreiben zu können.

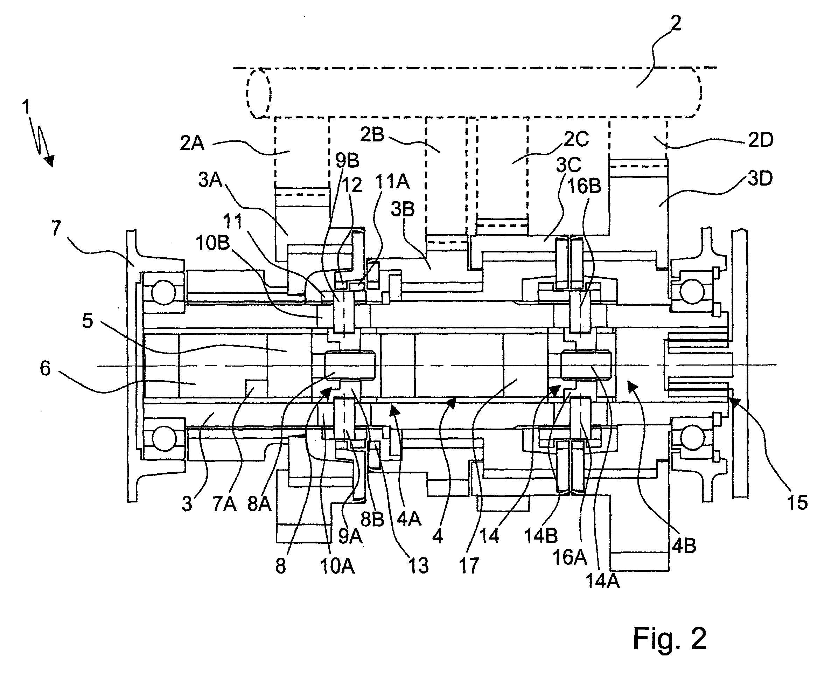

Fig. 2 zeigt ein zweites Ausführungsbeispiel einer Getriebeeinrichtung 1, welches sich im Wesentlichen lediglich in der Ausführung der Vorrichtung 4 zum Betätigen der Zahnräder 3A bis 3D unterscheidet, weshalb in der nachfolgenden Beschreibung im Wesentlichen lediglich auf die Unterschiede näher eingegangen wird. Bei der Ausführung der Getriebeeinrichtung 1 gemäß Fig. 2 sind die elektrischen Aktoren 5 und 17 der Vorrichtung 4 zum Betätigen der Losräder 3A bis 3D fest mit der Vorgelegewelle 3 verbunden und rotieren im Betrieb der Getriebeeinrichtung 1 somit mit der Drehzahl der Vorgelegewelle 3. Somit ist im Bereich zwischen den Spindelmuttern 8B und 14B und den Bolzen 9A, 9B und 16A, 16B keine mechanische Drehzahlabkoppelung mehr erforderlich.

Eine Energie- und/oder Steuersignalübertragung zwischen extern der Vorgelegewelle 3 vorgesehenen und gehäusefest ausgeführten Bauteilen und dem drehfest mit der Vorgelegewelle 3 verbundenen Aktoren 5 und 17 wird vorliegend über einen auf Induktionsbasis arbeitenden Drehübertrager 15 durchgeführt. Das bedeutet, dass über den induktiven Drehübertrager 15 sowohl die zum Antreiben der elektrischen Aktoren 5 und 17 erforderliche Antriebsenergie als auch bidirektional die erforderlichen Steuersignale, d. h. Soll- und Istwerte, berührungslos ausgetauscht werden. Alternativ zu der induktiven Übertragung der Energie und der Steuersignale sind diese auch über eine entsprechende Schleifkontaktierung übertragbar.

Sowohl die Zuschalteinrichtung 4A als auch die Zuschalteinrichtung 4B sind Teil eines Moduls, welches sich während der Montage als Ganzes in das Innere der Vorgelegewelle 3 einschieben lässt. Dabei ist während der Montage eine Verdrehung des Moduls vorzugsweise um 90° in seiner axialen Endposition vorgesehen, um eine Verbindung zwischen den Spindelmuttern 8B und 14B und den Bolzen 9A, 9B sowie 16A und 16B zu schaffen. Anschließend wird das Modul durch entsprechende Maßnahmen, wie einer Klipsverbindung, einer Schraubenverbindung, einer Stiftverbindung, einer Klebeverbindung oder einem Verstemmen drehfest mit der Vorgelegewelle 3 verbunden.

Bei einer weiteren vorteilhaften Ausgestaltung der erfindungsgemäßen Vorrichtung ist diese lediglich mit einem elektrischen Aktor zum Aufbringen der Betätigungskraft zum Zu- bzw. Abschalten eines Bauteiles bzw. eines Zahnrades ausgeführt, dem ein so genannter zugeordnet Auswählaktor ist. Mittels des Auswählaktors ist zwischen den verschiedenen zu betätigenden Bauteilen bzw. Zahnrädern eine Auswahl durchführbar, so dass das über den Auswählaktor ausgewählte Zahnrad oder Bauteil bzw. das diesem zugeordnete Schaltelement mit der vom elektrischen Aktor erzeugten Betätigungsenergie beaufschlagt wird.

Dabei ist der Auswählaktor vorzugsweise als Schaltmagnet ausgeführt, der zwischen dem elektrischen Aktor der Vorrichtung und dem über die Vorrichtung zu betätigenden Bauteil bzw. Zahnrad jeweils eine für die Betätigung des Bauteiles oder des Zahnrades bzw. diesem zugeordneten Schaltelement erforderliche Verbindung herstellt.

Generell ist die vorbeschriebene Vorrichtung auch für andere selbstverstärkende Systeme, wie Keilbremsen oder Keilkupplungen geeignet, wobei das zum Betätigen der Elemente vorgesehene System auf einfache Art und Weise als Modul ausführbar und an entsprechender Stelle montiert werden kann.

### Bezugszeichen

- 1: Getriebeeinrichtung
- 2: Getriebehauptwelle
- 2A bis 2D: Zahnräder
- 3: Vorgelegewelle
- 3A bis 3D: Zahnräder
- 4: Vorrichtung
- 4A,B: Zuschalteinrichtung
- 5: elektrischer Aktor
- 6: Steuer- und Leistungselektronik
- 7: Gehäusebauteil
- 7A: Energiespeicher
- 8: Spindel-Mutter-Anordnung
- 8A: Spindel
- 8B: Mutter
- 9A,B: Bolzen
- 10A,B: Langloch
- 11: Hülsenelement
- 11 A: Zahnprofil
- 12: Zahnprofil
- 13: Zahnprofil
- 14: Spindel-Mutter-Anordnung
- 14A: Spindel
- 14B: Mutter
- 15: Drehübertrager
- 16A,B: Bolzen
- 17: Aktor

## Patentansprüche

1. Vorrichtung (4) zum Betätigen eines drehbar auf einer Welle (3) gelagerten Bauteiles, vorzugsweise eines als Losrad ausgeführten Zahnrades (3A bis 3D) einer Getriebeeinrichtung (1), welches Bauteil über wenigstens eine einen elektrischen Aktor (5, 17) aufweisende Zuschalteinrichtung (4A, 4B) in einen zugeschalteten Zustand überführbar ist, zu dem das Bauteil mit der Welle (3) drehfest verbunden ist, wobei der wenigstens eine Aktor (5, 17) wenigstens teilweise im Inneren der Welle (3) angeordnet ist und das Bauteil aus dem Inneren der Welle (3) heraus mit der zum Zu- oder Abschalten erforderlichen Betätigungskraft beaufschlagbar ist, **dadurch gekennzeichnet, dass** die Zuschalteinrichtung (4A, 4B) zwischen dem Aktor (5, 17) und dem Bauteil eine Antriebswandlereinrichtung (8, 14) aufweist, mittels welcher ein rotatorischer Antrieb des Aktors (5, 17) in eine translatorische Antriebsbewegung umwandelbar ist, und der elektrische Aktor (5, 17) als Elektromotor ausgebildet ist.

2. Vorrichtung nach Anspruch 1, **dadurch gekennzeichnet, dass** der Elektromotor (5, 17) drehfest mit einem Gehäusebauteil (7) verbunden ist.

3. Vorrichtung nach Anspruch 1, **dadurch gekennzeichnet, dass** der Elektromotor (5, 17) drehfest mit der Welle (3) verbunden ist.

4. Vorrichtung nach Anspruch 3, **dadurch gekennzeichnet, dass** die Antriebswandlereinrichtung (8, 14) als eine Spindel-Mutter-Anordnung mit oder ohne Selbsthemmung ausgeführt ist.

5. Vorrichtung nach Anspruch 3 oder 4, **dadurch gekennzeichnet, dass** zwischen dem Elektromotor und der Antriebswandlereinrichtung ein Getriebe, vorzugsweise ein Planetengetriebe, angeordnet ist.

6. Vorrichtung nach einem der Ansprüche 1 bis 5, **dadurch gekennzeichnet, dass** mittels dem Elektromotor (5, 17) vorzugsweise ein aktueller Schaltzustand des Bauteiles haltbar ist.

7. Vorrichtung nach einem der Ansprüche 1 bis 6, **dadurch gekennzeichnet, dass** der Elektromotor (5, 17) zum Halten des Schaltzustandes des Bauteiles ein Rastmoment zur Verfügung stellt.

8. Vorrichtung nach einem der Ansprüche 1 bis 7, **dadurch gekennzeichnet, dass** dem Elektromotor zum Halten des Schaltzustandes des Bauteiles eine elektrisch ansteuerbare Bremse zugeordnet ist, welche im stromlosen Zustand eine Veränderung des Schaltzustandes des Bauteiles sperrt.

9. Vorrichtung nach einem der Ansprüche 1 bis 8, **dadurch gekennzeichnet, dass** der Elektromotor (5, 17) in Abhängigkeit eines aktuellen Schaltzustandes der dem Bauteil zugeordneten Zuschalteinrichtung (4A, 4B) und/oder einer aktuellen Antriebsleistung ansteuer- und/oder regelbar ist.

10. Vorrichtung nach einem der Ansprüche 1 bis 9, **dadurch gekennzeichnet, dass** mehrere Elektromotoren (5, 17) vorgesehen sind, welche in einem Modul zusammengefasst sind.

11. Vorrichtung nach einem der Ansprüche 1 bis 10, **dadurch gekennzeichnet, dass** eine dem Elektromotor (5, 17) zugeordnete Leistungs- und/oder Steuerelektronik (6) wenigstens teilweise im Inneren der Welle (3) angeordnet ist.

12. Vorrichtung nach einem der Ansprüche 1 bis 11, **dadurch gekennzeichnet, dass** eine dem Elektromotor (5, 17) zugeordnete Leistungs- und/oder Steuerelektronik (6) mit dem Elektromotor (5, 17) ein gemeinsames Modul ausbildet.

13. Vorrichtung nach einem der Ansprüche 1 bis 12, **dadurch gekennzeichnet, dass** ein dem Elektromotor (5) zugeordneter elektrischer Speicher (7A) wenigstens teilweise im Inneren der Welle (3) angeordnet ist.

14. Vorrichtung nach einem der Ansprüche 3 bis 13, **dadurch gekennzeichnet, dass** eine Energie- und/oder Steuersignalübertragung zwischen extern der Welle (3) vorgesehenen und gehäusefest ausgeführten Bauteilen und dem drehfest mit der Welle (3) verbundenen Elektromotor (5, 17) über Schleifkontakte oder Induktion durchführbar ist.

15. Vorrichtung nach einem der Ansprüche 1 bis 14, **dadurch gekennzeichnet, dass** der im Inneren der Welle angeordnete Teil des Elektromotors mit einem Ölkanal zum Führen von Hydraulikfluid ausgebildet ist.

## Claims

1. Device (4) for the actuation of a component mounted rotatably on a shaft (3), preferably of a gearwheel (3A to 3D), designed as a loose wheel, of a transmission device (1), which component can be transferred via at least one cut-in device (4A, 4B) having an electric actuator (5, 17) into a cut-in state in which the component is connected fixedly in terms of rotation to the shaft (3), the at least one actuator (5, 17) being arranged at least partially inside the shaft (3), and the component being capable of being acted upon from inside the shaft (3) by the actuating force necessary for cutting in or cutting out, **characterized in that** the cut-in device (4A, 4B) has between the actuator (5, 17) and the component a drive converter device (8, 14), by means of which a rotary drive of the actuator (5, 17) can be converted into a translational drive movement, and the electric actuator (5, 17) is designed as an electric motor.

2. Device according to Claim 1, **characterized in that** the electric motor (5, 17) is connected fixedly in terms of rotation to a housing component (7).

3. Device according to Claim 1, **characterized in that** the electric motor (5, 17) is connected fixedly in terms of rotation to the shaft (3).

4. Device according to Claim 3, **characterized in that** the drive converter device (8, 14) is designed as a spindle-nut arrangement with or without self-locking.

5. Device according to Claim 3 or 4, **characterized in that** a gear, preferably a planetary gear, is arranged between the electric motor and the drive converter device.

6. Device according to one of Claims 1 to 5, **characterized in that** preferably a current switching state of the component can be held by means of the electric motor (5, 17).

7. Device according to one of Claims 1 to 6, **characterized in that** the electric motor (5, 17) makes available a latching moment for holding the switching state of the component.

8. Device according to one of Claims 1 to 7, **characterized in that**, for holding the switching state of the component, the electric motor is assigned an electrically activateable brake which, in the currentless state, blocks a variation in the switching state of the component.

9. Device according to one of Claims 1 to 8, **characterized in that** the electric motor (5, 17) can be activated and/or regulated as a function of a current switching state of the cut-in device (4A, 4B) assigned to the component and/or as a function of a current drive power.

10. Device according to one of Claims 1 to 9, **characterized in that** a plurality of electric motors (5, 17) which are combined in a module are provided.

11. Device according to one of Claims 1 to 10, **characterized in that** power and/or control electronics (6) assigned to the electric motor (5, 17) are arranged at least partially inside the shaft (3).

12. Device according to one of Claims 1 to 11, **characterized in that** power and/or control electronics (6) assigned to the electric motor (5, 17) form with the electric motor (5, 17) a common module.

13. Device according to one of Claims 1 to 12, **characterized in that** an electrical accumulator (7A) assigned to the electric motor (5) is arranged at least partially inside the shaft (3).

14. Device according to one of Claims 3 to 13, **characterized in that** energy and/or control-signal transmission can be carried out via sliding contacts or induction between components provided externally to the shaft (3) and formed so as to be fixed with respect to the housing and the electric motor (5, 17) connected fixedly in terms of rotation to the shaft (3).

15. Device according to one of Claims 1 to 14, **characterized in that** that part of the electric motor which is arranged inside the shaft is designed with an oil duct for carrying hydraulic fluid.

## Revendications

1. Dispositif (4) pour l'actionnement d'un composant monté à rotation sur un arbre (3), de préférence d'une roue dentée (3A à 3D) d'un dispositif de transmission (1) réalisée sous forme de pignon fou, lequel composant peut être transféré par le biais d'au moins un dispositif de commutation (4A, 4B) présentant un actionneur électrique (5, 17) dans un état enclenché, dans lequel le composant est connecté de manière solidaire en rotation à l'arbre (3), l'au moins un actionneur (5, 17) étant disposé au moins en partie à l'intérieur de l'arbre (3) et le composant pouvant être sollicité hors de l'intérieur de l'arbre (3) avec la force d'actionnement nécessaire pour l'enclenchement ou la déconnexion, **caractérisé en ce que** le dispositif de commutation (4A, 4B) entre l'actionneur (5, 17) et le composant présente un dispositif de convertisseur d'entraînement (8, 14) au moyen duquel un entraînement en rotation de l'actionneur (5, 17) peut être converti en un mouvement d'entraînement en translation et l'actionneur électrique (5, 17) est réalisé sous forme de moteur électrique.

2. Dispositif selon la revendication 1, **caractérisé en ce que** le moteur électrique (5, 17) est connecté de manière solidaire en rotation à un composant de boîtier (7).

3. Dispositif selon la revendication 1, **caractérisé en ce que** le moteur électrique (5, 17) est connecté de manière solidaire en rotation à l'arbre (3).

4. Dispositif selon la revendication 3, **caractérisé en ce que** le dispositif de convertisseur d'entraînement (8, 14) est réalisé sous forme d'agencement broche-écrou avec ou sans autoblocage.

5. Dispositif selon la revendication 3 ou 4, **caractérisé en ce qu'**entre le moteur électrique et le dispositif de convertisseur d'entraînement est disposée une transmission, de préférence une transmission planétaire.

6. Dispositif selon l'une quelconque des revendications 1 à 5, **caractérisé en ce que** de préférence un état de commutation actuel du composant peut être maintenu au moyen du moteur électrique (5, 17).

7. Dispositif selon l'une quelconque des revendications 1 à 6, **caractérisé en ce que** le moteur électrique (5, 17) fournit un couple d'encliquetage pour maintenir l'état de commutation du composant.

8. Dispositif selon l'une quelconque des revendications 1 à 7, **caractérisé en ce qu'**un frein à commande électrique est associé au moteur électrique pour maintenir l'état de commutation du composant, lequel frein, dans un état non alimenté en courant, bloque une variation de l'état de commutation du composant.

9. Dispositif selon l'une quelconque des revendications 1 à 8, **caractérisé en ce que** le moteur électrique (5, 17) peut être commandé et/ou régulé en fonction d'un état de commutation actuel du dispositif de commutation (4A, 4B) associé au composant et/ou d'une puissance d'entraînement actuelle.

10. Dispositif selon l'une quelconque des revendications 1 à 9, **caractérisé en ce que** plusieurs moteurs électriques (5, 17) sont prévus, lesquels sont réunis en un module.

11. Dispositif selon l'une quelconque des revendications 1 à 10, **caractérisé en ce qu'**une électronique de puissance et/ou de commande (6) associée au moteur électrique (5, 17) est disposée au moins en partie à l'intérieur de l'arbre (3).

12. Dispositif selon l'une quelconque des revendications 1 à 11, **caractérisé en ce qu'**une électronique de puissance et/ou de commande (6) associée au moteur électrique (5, 17) forme avec le moteur électrique (5, 17) un module commun.

13. Dispositif selon l'une quelconque des revendications 1 à 12, **caractérisé en ce qu'**un accumulateur électrique (7A) associé au moteur électrique (5) est disposé au moins en partie à l'intérieur de l'arbre (3).

14. Dispositif selon l'une quelconque des revendications 3 à 13, **caractérisé en ce qu'**un transfert d'énergie et/ou de signaux de commande peut être réalisé par le biais de contacts glissants ou par induction entre des composants prévus à l'extérieur de l'arbre (3) et réalisés de manière fixée au boîtier et le moteur électrique (5, 17) connecté de manière solidaire en rotation à l'arbre (3).

15. Dispositif selon l'une quelconque des revendications 1 à 14, **caractérisé en ce que** la partie du moteur électrique disposée à l'intérieur de l'arbre est réalisée avec un canal d'huile pour guider un fluide hydraulique.
